# EUROPEAN PATENT APPLICATION

(11) **EP 4 477 291 A1**
(43) Date of publication of application: **18.12.2024**
(21) Application number: 23179379.5
(22) Date of filing: 15.06.2023
(51) Int. Cl.: B01D 53/04

(54) **ADSORPTION SEGMENT FOR DIRECT AIR CAPTURE UNIT**

(71) Applicant: Siemens Energy Global GmbH & Co. KG, 81739 München (DE)
(72) Inventor: Svensson, Oscar, 582 55 Linköping (SE); Hjalmarsson, Christer, 61291 Finspong (SE); Jaksch, Peter, 60211 Norrköping (SE)

(57) **Abstract**

An adsorption segment (304) includes a filter plate (414) including a first plate (602) having a first thickness, the first plate (602) defining a plurality of first flow passages through the first thickness to pass through an air flow (122), a second plate (604) having a second thickness, the second plate (604) defining a plurality of second flow passages through the second thickness to pass through the air flow (122), the second plate (604) attached to the first plate (602) to define a plurality of pockets (606), each pocket (606) separated from the remaining pockets (606), a sorbent (608) positioned in each pocket (606) to adsorb carbon dioxide from the air flow (122), a first mesh (624) attached to the first plate (602), the first mesh (624) having a plurality of first apertures, a second mesh (626) attached to the second plate (604), the second mesh (626) having a plurality of second apertures, and a frame (402), the filter plate (414) being installed in the frame (402).

## Description

### BACKGROUND

Gas separation by adsorption is an industrial method for the removal of a specific gaseous component from a gas mixture. One application is removal of carbon dioxide (CO₂) from gas streams such as, flue or exhaust gases, industrial waste gases, biogas, or even atmospheric air. The process for CO₂ capturing from air is known as direct air capture. The direct air capture process is to have a solid sorbent to which the CO₂ molecules can adsorb through reactions with amine groups. During adsorption, air needs to be moved around a sorbent to provide the CO₂ that can be adsorbed. During desorption, the sorbent needs to be enclosed in a container so that the released CO₂ can be captured. To desorb, the temperature of the sorbent container is raised, and the partial pressure of the CO₂ is lowered. The latter can be done by purging with another medium and/or lowering the absolute pressure in the sorbent container.

Typically, steam is used for both purging and heating of the sorbent. At the start of the desorption phase, the air pressure in the sorbent container is lower by use of a vacuum pump, thereby lowering the amount of air that is mixed with the CO₂ to be delivered by the direct air capture unit. Fan which is needed for moving air flow, such as ambient air, is one of the major power consumers. The other major consumer is the power needed to supply the heat needed for desorption. The service cost for exchange of sorbent is the other one of the major frequent recurrent operational expenses, both in terms of labor and downtime of the direct air capture unit.

### BRIEF SUMMARY

In one aspect, an adsorption segment is provided. The adsorption segment includes a filter plate including a first plate having a first thickness, the first plate defining a plurality of first flow passages through the first thickness, the plurality of first flow passages selected to allow passing through an air flow, a second plate having a second thickness, the second plate defining a plurality of second flow passages through the second thickness, the plurality of second flow passages selected to allow passing through the air flow, the second plate attached to the first plate to define a plurality of pockets, each pocket separated from the remaining pockets, a sorbent positioned in each pocket and selected to adsorb carbon dioxide from the air flow, a first mesh attached to the first plate, the first mesh having a plurality of first apertures selected to allow passing through the air flow, a second mesh attached to the second plate, the second mesh having a plurality of second apertures selected to allow passing through the air flow, and a frame, the filter plate being installed in the frame.

### BRIEF DESCRIPTION OF THE DRAWINGS

To easily identify the discussion of any particular element or act, the most significant digit or digits in a reference number refer to the figure number in which that element is first introduced.
FIG. 1 illustrates a perspective external view of a direct air capture unit.
FIG. 2 illustrates a perspective internal view of the direct air capture unit of FIG. 1.
FIG. 3 illustrates a perspective view of an adsorption container of the direct air capture unit of FIG. 1.
FIG. 4 illustrates a perspective view of an adsorption segment of the adsorption container of FIG. 3.
FIG. 5 illustrates a section view of the adsorption segment of FIG. 4.
FIG. 6 illustrates a section view of a filter plate of the adsorption segment of FIG. 4.
FIG. 7 illustrates a perspective view of a first plate and a second plate suitable to be used in the filter plate of FIG. 6.
FIG. 8 illustrates a section view of a further filter plate of the adsorption segment of FIG. 4.
FIG. 9 illustrates a section view of another further filter plate of the adsorption segment of FIG. 4.
FIG. 10 illustrates a pattern of pockets of the filter plate of the adsorption segment of FIG. 4.
FIG. 11 illustrates a pattern of pockets of the filter plate of the adsorption segment of FIG. 4.
FIG. 12 illustrates a pattern of pockets of the filter plate of the adsorption segment of FIG. 4.
FIG. 13 illustrates a pattern of pockets of the filter plate of the adsorption segment of FIG. 4.
FIG. 14 illustrates a pattern of pockets of the filter plate of the adsorption segment of FIG. 4.
FIG. 15 illustrates a pattern of pockets of the filter plate of the adsorption segment of FIG. 4.
FIG. 16 illustrates a section view of the filter plate of the adsorption segment of FIG. 4 having a plug.
FIG. 17 illustrates a perspective view of the plug of FIG. 16.
FIG. 18 illustrates a perspective view of a further plug of FIG. 16.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including", "having", and "comprising", as well as derivatives thereof, mean inclusion without limitation. The singular forms "a", "an", and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith" as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

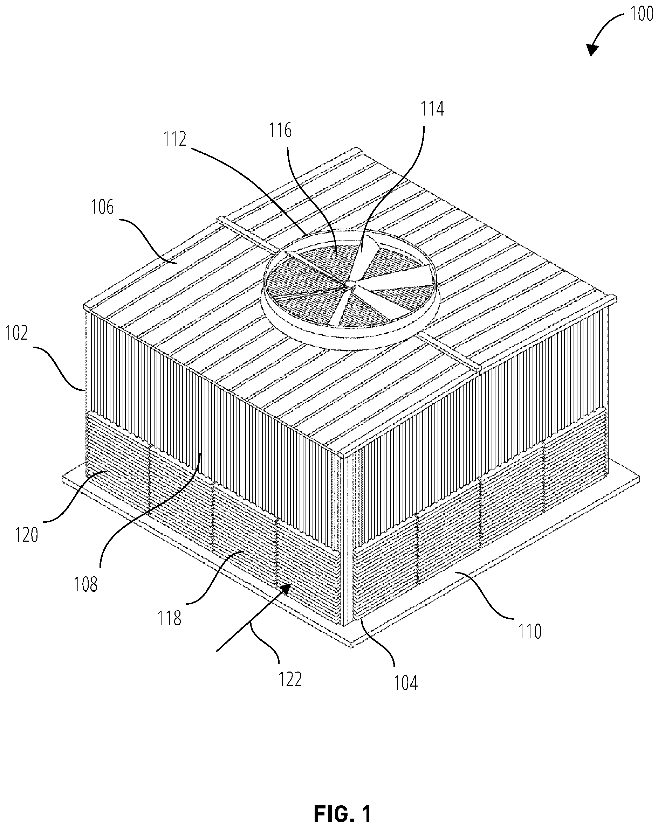

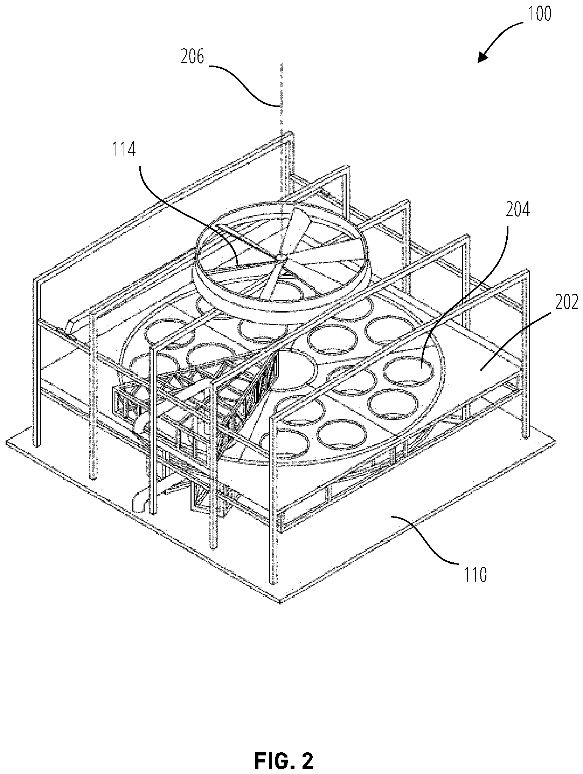

FIG. 1 illustrates a perspective external view of a direct air capture unit 100. The direct air capture unit 100 includes a housing 102 that encloses a plurality of internal components which are shown in FIG. 2. In the illustrated embodiment, the direct air capture unit 100 is a cuboid. In other embodiments, the direct air capture unit 100 may have shapes other than cuboid, such as cube, pentagonal prism, hexagonal prism, cylinder, etc.

The housing 102 has a bottom surface 104, a top surface 106 opposite to the bottom surface 104, and a side surface 108 extending between the bottom surface 104 and the top surface 106. The bottom surface 104 is placed on a ground surface 110. The top surface 106 has an opening 112 in which a fan 114 is placed. A louver panel 116 is also placed in the opening 112 to inhibit water from entering the housing 102. The side surface 108 has a plurality of louvered sidings 118 that are placed adjacent to each other. Each louvered siding 118 of the plurality of louvered sidings 118 has a plurality of gaps 120 to allow an air flow 122 entering the housing 102. The air flow 122 includes ambient air.

FIG. 2 illustrates a perspective internal view of the direct air capture unit 100 of FIG. 1 with the housing 102 being removed for illustration purpose. The direct air capture unit 100 has a sorbent bed 202. A central axis 206 extends from a center of the sorbent bed 202. The sorbent bed 202 has a circular shape, with other configurations possible, such as rectangular, square, oval, etc.

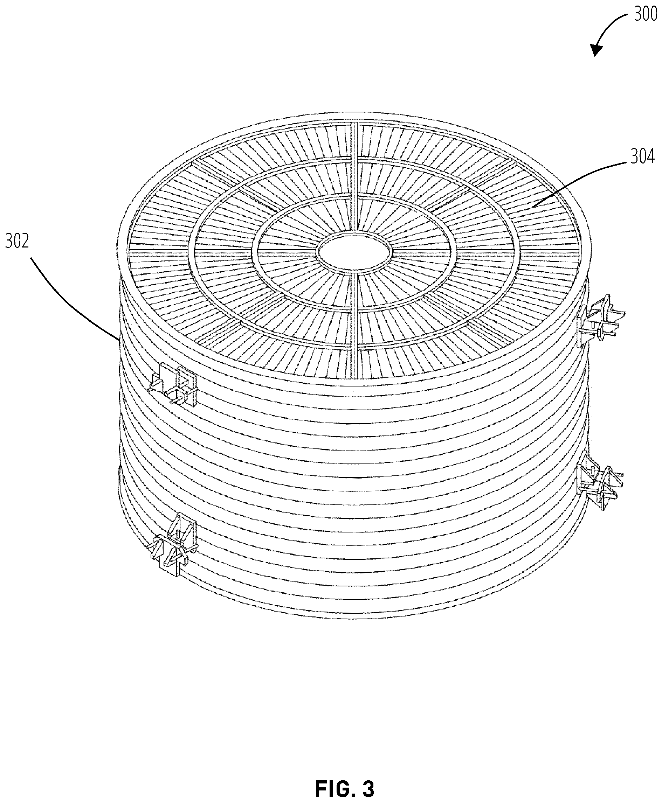

The sorbent bed 202 has a plurality of holes 204 circumferentially distributed in the sorbent bed 202 with respect to the central axis 206. Each hole 204 of the plurality of holes 204 has a cylindrical shape, with other configurations possible, such as cuboid, cube, pentagonal prism, hexagonal prism, etc. The plurality of holes 204 are circumferentially arranged in two distinct circles in the sorbent bed 202. In other embodiments, the plurality of holes 204 may be circumferentially arranged in one circle or more than circles in the sorbent bed 202. An adsorption container 300 (shown in FIG. 3) can be installed in each hole 204 for adsorbing carbon dioxide in the air flow 122 when the air flow 122 flows through the adsorption container 300.

FIG. 3 illustrates a perspective view of an adsorption container 300 of the direct air capture unit 100 of FIG. 1. The adsorption container 300 has a shell 302. The shell 302 is a solid structure. The shell 302 is made from corrugated steel, with other materials possible. The adsorption container 300 has a cylindrical shape. In other embodiments, the adsorption container 300 may have different shapes, such as cuboid, cube, pentagonal prism, hexagonal prism, etc.

The adsorption container 300 has a plurality of adsorption segments 304 that are arranged within the shell 302. In the illustrated embodiment, the adsorption container 300 has twenty adsorption segments 304. In other embodiments, the adsorption container 300 may have more or less than twenty adsorption segments 304 as desired.

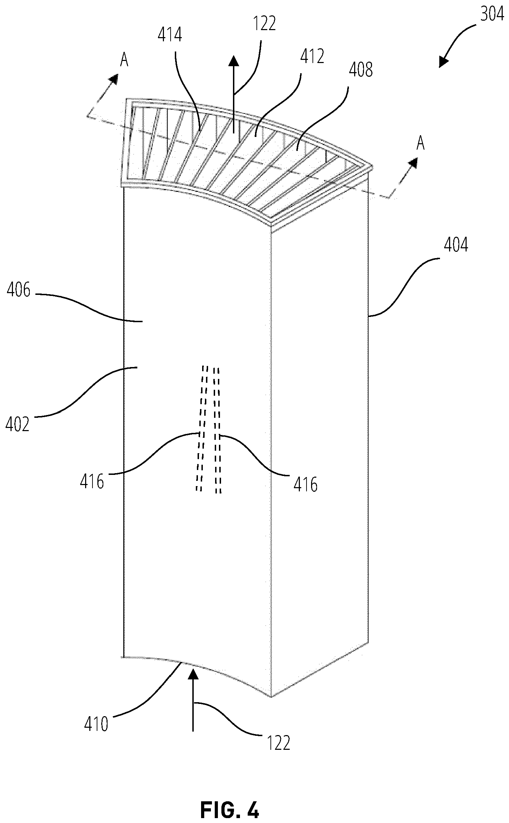

FIG. 4 illustrates a perspective view of one adsorption segment 304 of the plurality of adsorption segments 304 of FIG. 3. The adsorption segment 304 includes a frame 402. The frame 402 has a first closed side 404 and a second closed side 406 that is opposite to the first closed side 404. A hollow interior 408 is defined between the first closed side 404 and the second closed side 406.

The frame 402 has a first open side 410 and a second open side 412 that is opposite to the first open side 410 for the air flow 122 passing through the adsorption segment 304. A filter plate 414 is installed in the hollow interior 408 of the frame 402.

The frame 402 has a plurality of beams 416 disposed on the first closed side 404 and the second closed side 406. FIG. 4 only shows two adjacent beams 416 of the plurality of beams 416 on the second closed side 406. It is understood that the first closed side 404 also has a plurality of beams 416. Each beam 416 of the plurality of beams 416 extends between the first open side 410 and the second open side 412. FIG. 4 shows the beam 416 extends a partial length between the first open side 410 and the second open side 412. In other embodiments, the beam 416 may extend the entire length between the first open side 410 and the second open side 412, or have a plurality of segments between the first open side 410 and the second open side 412. One end of each filter plate 414 is inserted into one beam 416 on the first closed side 404 and the other end of the filter plate 414 is inserted into one beam 416 on the second closed side 406. The beam 416 has an oblique angle with respect to the first open side 410 and the second open side 412, respectively. Adjacent beams 416 form a V-shape between the first open side 410 and the second open side 412. In other constructions, the beam 416 may be perpendicular to the first open side 410 and the second open side 412. The beam 416 has a U-shape, with other shapes possible.

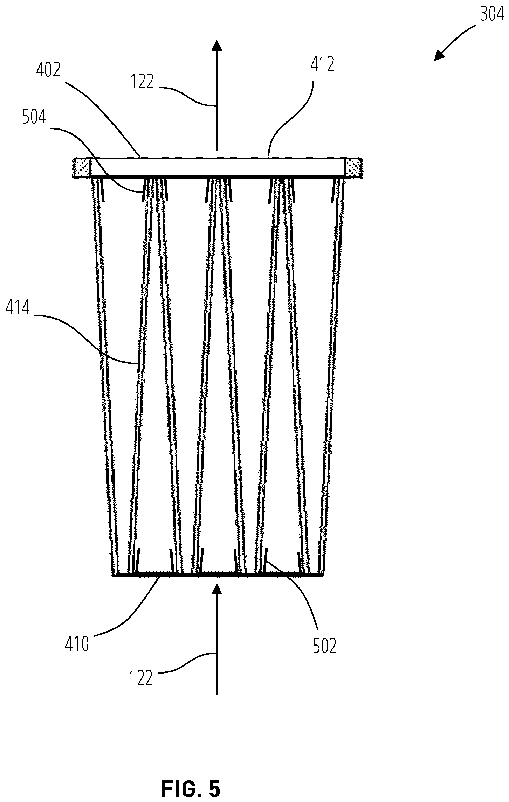

FIG. 5 illustrates a section view of the adsorption segment 304 of FIG. 4 along a direction of A-A. The adsorption segment 304 has a plurality of first brackets 502 that are disposed at the first open side 410 between the first closed side 404 and the second closed side 406. The adsorption segment 304 also has a plurality of second brackets 504 that are disposed at the second open side 412 between the first closed side 404 and the second closed side 406. The plurality of first brackets 502 and the plurality of second brackets 504 are offset from one another along the first open side 410 and the second open side 412.

The plurality of filter plates 414 are independent and distinct from one another. One end of each filter plate 414 is inserted into one first bracket 502 and the other end of the filter plate 414 is inserted into one second bracket 504. The plurality of filter plates 414 are separately installed in the frame 402 forming an undulating profile along the first open side 410 and the second open side 412. Each filter plate 414 is planar when installed in the frame 402. Adjacent filter plates 414 form a V-shape between the first open side 410 and the second open side 412. The filter plate 414 has a thickness between 5 mm to 25 mm, preferably between 5 mm to 15 mm, with other dimensions possible.

Each first bracket 502 of the plurality of first brackets 502 has a U-shape. Each second bracket 504 of the plurality of second brackets 504 has a U-shape. Each U-shaped first bracket 502 supports two adjacent filter plate 414 and closes a gap between the two adjacent filter plates 414 at the first open side 410. Each U-shaped second bracket 504 supports two adjacent filter plate 414 and closes a gap between the two adjacent filter plates 414 at the second open side 412.

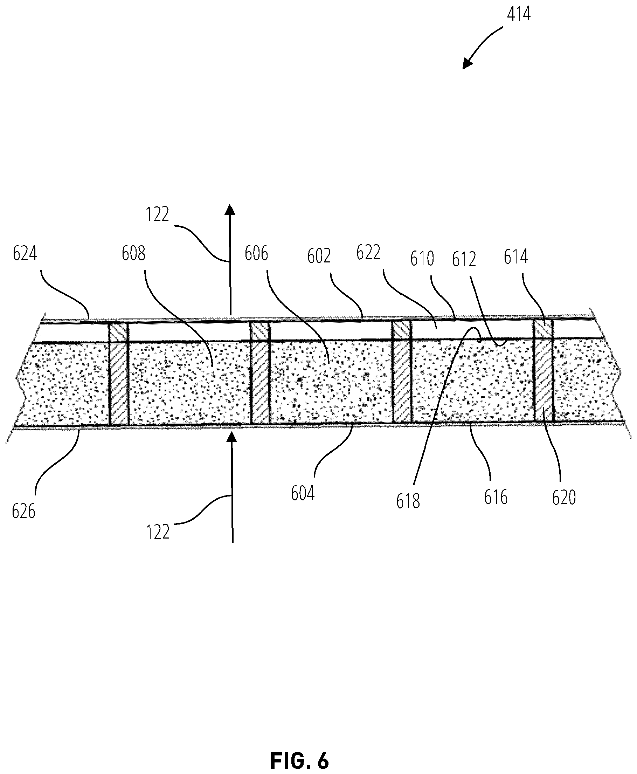

FIG. 6 illustrates a section view of one filter plate 414 of the adsorption segment 304 of FIG. 4. The filter plate 414 includes a first plate 602 and a second plate 604. The first plate 602 is a planar plate having a first surface 610, a second surface 612, and a plurality of first walls 614 extend between the first surface 610 and the second surface 612. The first plate 602 has a first thickness. The first plate 602 has a plurality of first flow passages through the first thickness that are defined by the plurality of first walls 614. Each first wall 614 of the plurality of first walls 614 is perpendicular to the first surface 610 and the second surface 612. In other embodiments, the first wall 614 may have an oblique angle with respect to the first surface 610 and the second surface 612.

The second plate 604 is a planar plate having a third surface 616, a fourth surface 618, and a plurality of second walls 620 extend between the third surface 616 and the fourth surface 618. The fourth surface 618 is attached with the second surface 612. The second plate 604 has a second thickness. The second plate 604 has a plurality of second flow passages through the second thickness that are defined by the plurality of second walls 620. Each second wall 620 of the plurality of second walls 620 is perpendicular to the third surface 616 and the fourth surface 618. In other embodiments, the second wall 620 may have an oblique angle with respect to the third surface 616 and the fourth surface 618. The first thickness is less than the second thickness. In other embodiments, the first thickness may be equal to or larger than the second thickness. The first plate 602 and the second plate 604 may be made from materials, such as molded plastic, carbon steel, stainless steel, aluminum, etc.

The first plate 602 and the second plate 604 are attached together to define a plurality of pockets 606. Each pocket 606 of the plurality of pockets 606 is separated from each other by the plurality of first walls 614 and the second walls 620. The first plate 602 and the second plate 604 are attached together by non-fixed bonding, such as clips, hocks, barbing, beam profile, any other suitable methods. The first plate 602 and second plate 604 may be joined together at one edge functioning as a hinge, with locking mechanism on other or all remaining edges. The first plate 602 and the second plate 604 may be joined together by fixed bonding.

A quantity of sorbent 608 is positioned in each pocket 606 of the plurality of pockets 606. The sorbent 608 fills a first volume within the pocket 606 when the sorbent 608 has not adsorbed water. The sorbent 608 swells when the sorbent 608 has adsorbed water. The sorbent 608 then fills a second volume within the pocket 606. The second volume is larger than the first volume. In the embodiment illustrated in FIG. 6, the filter plate 414 is installed in the frame 402 in a horizontal direction with the first plate 602 being placed above the second plate 604. The sorbent 608 is contained in a portion of the pockets 606 of the second plate 604 and the remaining portion of the pockets 606 of the first plate 602 is empty without the sorbent 608. The empty space of each pocket 606 defines a cavity 622. The cavity 622 allows the sorbent 608 to swell. A volume of the pocket 606 is not changed in response to the volume change of the sorbent 608. The sorbent 608 includes granular materials and amine-based materials, with other materials possible. The sorbent 608 is formed in bead type, such as spherical bead type, with other types possible. A diameter of the spherical bead type is between 0.1 mm to 1.5 mm, with other dimensions possible.

A first mesh 624 is attached to the first plate 602. The first mesh 624 is porous having a plurality of first apertures across the first mesh 624. A second mesh 626 is attached to the second plate 604. The second mesh 626 is porous having a plurality of second apertures across the second mesh 626. The air flow 122 enters the filter plate 414 through the second mesh 626 and the second plate 604 and exits the filter plate 414 through the first plate 602 and the first mesh 624. The first mesh 624 and the second mesh 626 may be joined to the first plate 602 and the second plate 604, respectively, by ultrasound welding, heat wedge welding, glue, or any other suitable methods. The first mesh 624 and the second mesh 626 include wires to define the plurality of first apertures and the plurality of second apertures. The wire has a diameter between 0.05 mm to 0.2 mm, the plurality of first apertures and the plurality of second apertures have a diameter between 0.2 mm to 0.5 mm, with other dimensions possible. The first mesh 624 and the second mesh 626 may be made from the same material, such as synthetic fibers of polyamide mesh, stainless steel mesh, aluminum mesh, etc. The first mesh 624 and the second mesh 626 may be made from different materials.

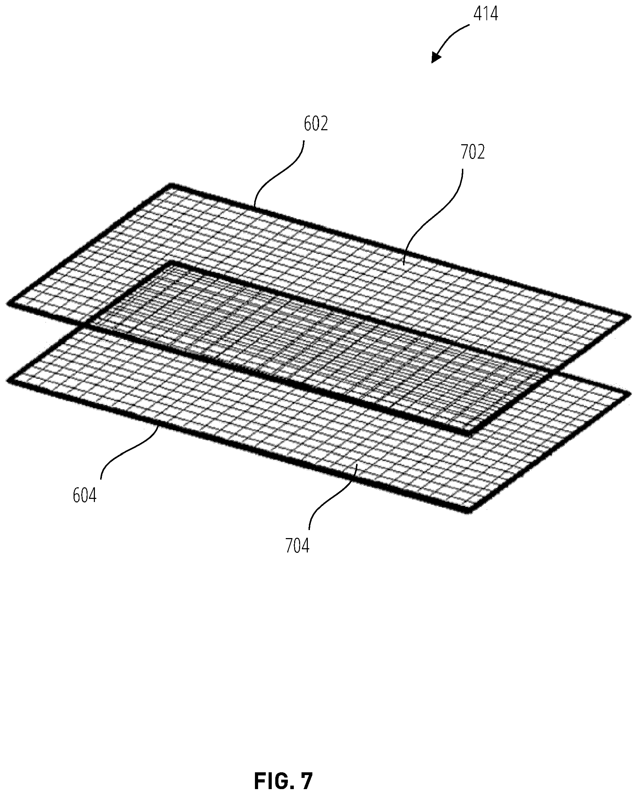

FIG. 7 illustrates a plane view of a first plate 602 and a second plate 604 that are suitable to be used in the filter plate 414 of FIG. 6. The first plate 602 is a planar plate and has a plurality of first grids 702 through the first thickness. The plurality of first grids 702 define the plurality of first flow passages. The second plate 604 is a planar plate and has a plurality of second grids 704 through the second thickness. The plurality of second grids 704 define the plurality of second flow passages. Each first grid 702 of the plurality of first grids 702 has the same size as each second grid 704 of the plurality of second grids 704. One first grid 702 of the plurality of first grids 702 aligns with one second grid 704 of the plurality of second grids 704 to define the pocket 606 of the plurality of pockets 606 when the first plate 602 is attached to the second plate 604. In the embodiment illustrated in FIG. 7, the first thickness is substantially equal to the second thickness.

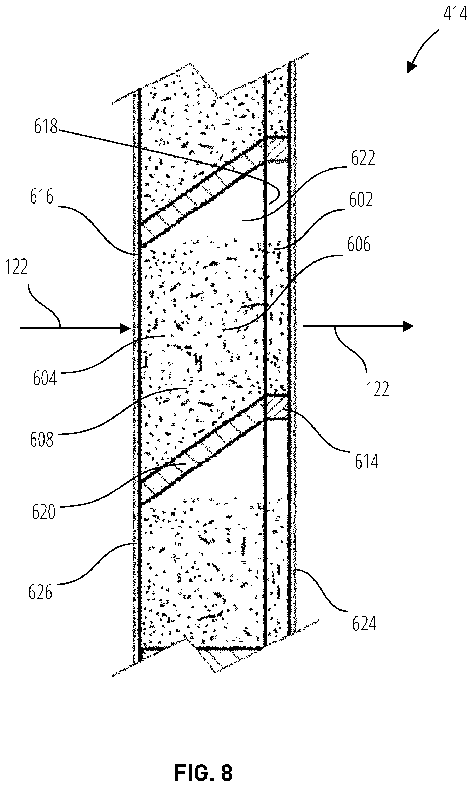

FIG. 8 illustrates a section view of further filter plate 414 of the adsorption segment 304 of FIG. 4. The filter plate 414 is installed in the frame 402 in a vertical direction. The second wall 620 is disposed between the third surface 616 and the fourth surface 618 of the second plate 604 with an oblique angle with respect to the third surface 616 and the fourth surface 618. The second wall 620 is angled in an upward direction toward the first plate 602. The sorbent 608 is positioned in each pocket 606 between adjacent second walls 620 and adjacent first walls 614. A cavity 622 is defined in each pocket 606. The cavity 622 is an empty space without the sorbent 608. Each pocket 606 at the second plate 604 is filled with the sorbent 608 to guide the air flow 122 to pass through the sorbent 608. The cavity 622 allows the sorbent 608 to swell when the sorbent 608 has adsorbed water.

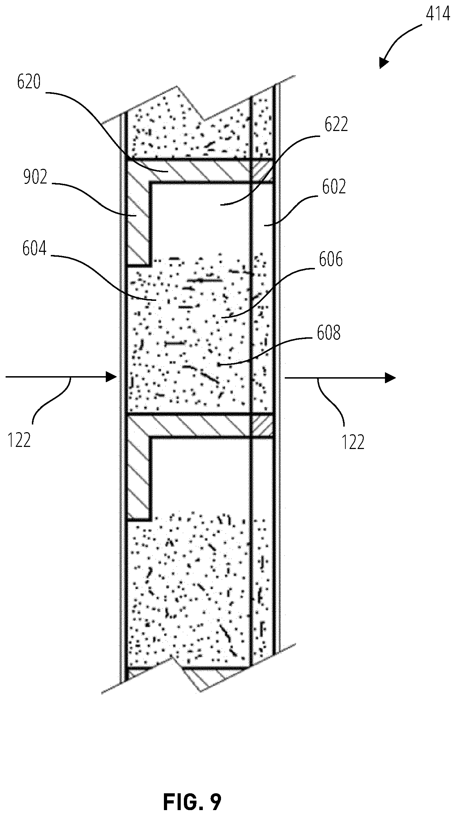

FIG. 9 illustrates a section view of another further filter plate 414 of the adsorption segment 304 of FIG. 4. A portion of the pocket 606 is coved by a solid plate 902. The solid plate 902 is attached to the second plate 604 to cover an edge of the cavity 622 . The solid plate 902 inhibits the air flow 122 flowing through the cavity 622 and forces the air flow 122 to pass through the sorbent 608. The solid plate 902 is a part of a L-shaped second wall 620 and is attached to the second plate 604 on an inner surface facing the pocket 606. In other embodiments, the solid plate 902 may be an independent and separated plate from the second wall 620 and/or may be attached to the second plate 604 on an outer surface facing away the pocket 606.

FIG. 6 illustrates the filter plate 414 is installed in the frame 402 in a horizontal direction. FIG. 8 and FIG. 9 illustrate the filter plate 414 is installed in the frame 402 in a vertical direction. In other embodiments, the filter plate 414 may be oriented in an oblique direction, or any desired directions.

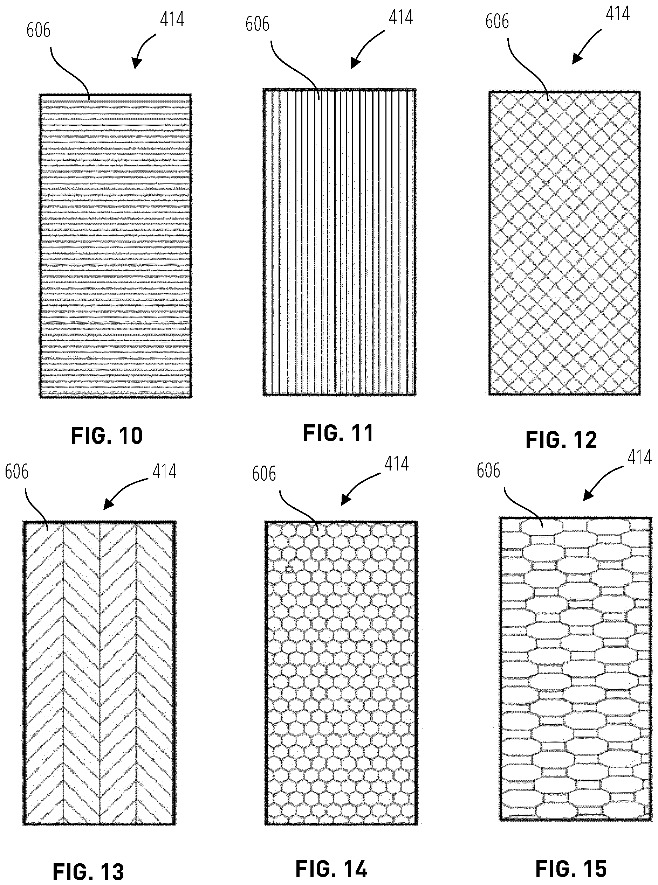

The plurality of pockets 606 forms a pattern on the filter plate 414. FIG. 10 illustrates the plurality of pockets 606 forms a horizontal pattern. FIG. 11 illustrates the plurality of pockets 606 forms a vertical pattern. FIG. 12 illustrates the plurality of pockets 606 forms a cross pattern. FIG. 13 illustrates the plurality of pockets 606 forms a fish bone pattern. FIG. 14 illustrates the plurality of pockets 606 forms a honeycomb pattern. FIG. 15 illustrates the plurality of pockets 606 forms an elongated honeycomb pattern. It is possible that the pockets 606 may form any other patterns that are desired.

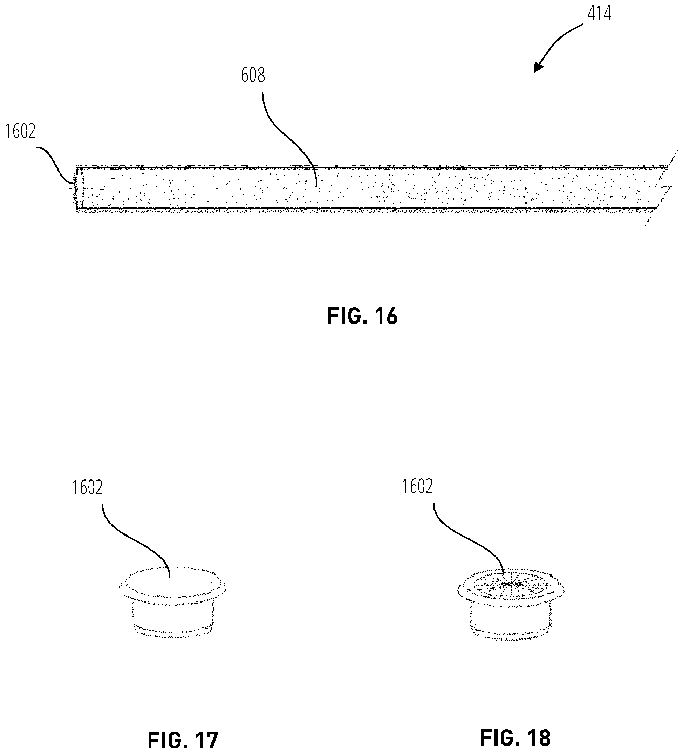

FIG. 16 illustrates a section view of a filter plate 414. A plug 1602 is installed at an opening of the filter plate 414. The plug 1602 is removably plugged into the filter plate 414 for extracting the sorbent 608 and/or injecting the sorbent 608 when the filter plate 414 is installed in the frame 402. FIG. 16 illustrates one plug 1602. In other embodiments, a plurality of plugs 1602 may be installed in a plurality of openings of the filter plate 414.

FIG. 17 illustrates a perspective view of a plug 1602 of FIG. 16. The plug 1602 is a solid plug. The plug 1602 is removed from the filter plate 414 for extracting the sorbent 608 and/or injecting the sorbent 608.

FIG. 18 illustrates a perspective view of a further plug 1602 of FIG. 16. The plug 1602 is a push through rubber plug. The sorbent 608 can be extracted from and/or injected into the filter plate 414 by a sorbent feeding tube pushing through the plug 1602 without removing the plug 1602 from the filter plate 414.

During operation, the air flow 122 is drawn by the fan 114 into the housing 102 of the direct air capture unit 100 through the louvered sidings 118. The air flow 122 is then drawn by the fan 114 into the plurality of frames 402 of the plurality of adsorption segments 304. The air flow 122 contacts the sorbent 608 in the filter plate 414 installed in the plurality of adsorption segments 304 to adsorb the CO₂. After adsorption, the air flow 122 is drawn by the fan 114 to exit the direct air capture unit 100 through the opening 112.

Each frame 402 of the plurality of frames 402 allows the filter plate 414 to be easily installed inside the adsorption container 300 and rapidly replaced when needed. During replacement, the filter plate 414 is removed from the frame 402 and a new filter plate 414 is installed into the frame 402 so that the frame 402 is reused. The rapid replacement of the filter plate 414 reduces the downtime of the direct air capture unit 100 and reduces installation time of a new or refurbished direct air capture unit 100. The filter plate 414 can be changed in some adsorption segments 304 or some adsorption containers 300 while the adsorption process is performing in the remaining adsorption segments 304 or the remaining adsorption containers 300.

The plurality of filter plates 414 are separately installed in the frame 402 into the beams 416, the first brackets 502, and the second brackets 504 in an undulating profile which allows more mass of sorbent 608 being contained within the frame 402 and at the same time the less thickness of the filter plate 414 and less pressure drop. For example, the thickness of the filter plate 414 is between 5 mm to 15 mm, the pressure drop through the filter plate 414 is between 100 Pa to 350 Pa, preferably between 100 Pa to 250 Pa, the area of the filter plate 414 and mass of the sorbent 608 within the frame 402 are increased due to the undulating profile. As such, the electrical power that is needed to operate the direct air capture unit 100 is reduced which is based on the area and the thickness of the filter plate 414. The undulating profile of the filter plates 414 also allows a higher sorbent 608 to frame 402 mass ratio which reduces thermal mass inside of the frame 402. This allows more energy savings during the desorption process.

The design of the filter plates 414 allows the filter plates 414 operating under a harsh conditions and withstanding medias, such as water, steam, CO₂, ambient air, etc., in a cyclic process. The cyclic process may repeat many thousands of times per year, for example, over 8000 cycles per year. The operation temperature of the filter plates 414 can be between -20°C to 100°C, the absolute operation pressure can be between 0.02 Bar to 1 Bar.

During operation, the sorbent 608 may be replaced in a shorter period of time, such as every one to three years. The frames 402, the first plate 602, the second plate 604, the first mesh 624, and the second mesh 626 may be replaced in a longer period of time, such as every twenty to twenty five years.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. An adsorption segment (304) comprising:
a filter plate (414) comprising:
a first plate (602) having a first thickness, the first plate (602) defining a plurality of first flow passages through the first thickness, the plurality of first flow passages selected to allow passing through an air flow (122);
a second plate (604) having a second thickness, the second plate (604) defining a plurality of second flow passages through the second thickness, the plurality of second flow passages selected to allow passing through the air flow (122), the second plate (604) attached to the first plate (602) to define a plurality of pockets (606), each pocket (606) separated from the remaining pockets (606);
a sorbent (608) positioned in each pocket (606) and selected to adsorb carbon dioxide from the air flow (122);
a first mesh (624) attached to the first plate (602), the first mesh (624) having a plurality of first apertures selected to allow passing through the air flow (122);
a second mesh (626) attached to the second plate (604), the second mesh (626) having a plurality of second apertures selected to allow passing through the air flow (122); and
a frame (402), the filter plate (414) being installed in the frame (402).

2. The adsorption segment (304) of claim 1, wherein the filter plate (414) is one of a plurality of filter plates (414) that are independent and distinct from one another, wherein the plurality of filter plates (414) are separately installed in the frame (402) forming an undulating profile.

3. The adsorption segment (304) of claim 1 or 2, wherein the frame (402) comprises:
a first closed side (404),
a second closed side (406) opposite to the first closed side (404),
a first open side (410),
a second open side (412) opposite to the first open side (410),
a plurality of first brackets (502) disposed at the first open side (410) between the first closed side (404) and the second closed side (406), and
a plurality of second brackets (504) disposed at the second open side (412) between the first closed side (404) and the second closed side (406), wherein each filter plate (414) of the plurality of filter plates (414) is inserted into one first bracket (502) and one second bracket (504).

4. The adsorption segment (304) of claim 3, wherein the plurality of first brackets (502) and the plurality of second brackets (504) are offset from one another along the first open side (410) and the second open side (412).

5. The adsorption segment (304) of any one of claims 1 to 4, wherein the first plate (602) comprises a plurality of first grids (702) and the second plate (604) comprises a plurality of second grids (704), and wherein each pocket (606) of the plurality of pockets (606) is defined by aligning one first grid (702) of the plurality of first grids (702) with one second grid (704) of the plurality of second grids (704) when attaching the first plate (602) to the second plate (604).

6. The adsorption segment (304) of any one of claims 1 to 5, wherein the plurality of pockets (606) forms a pattern, and wherein the pattern is selected from the group consisting of a horizontal pattern, a vertical pattern, a cross pattern, a fish bone pattern, a honeycomb pattern, and an elongated honeycomb pattern.

7. The adsorption segment (304) of any one of claims 1 to 6, wherein the filter plate (414) is planar when installed in the frame (402).

8. The adsorption segment (304) of any one of claims 1 to 7, wherein each first aperture of the plurality of first apertures and each second aperture of the plurality of second apertures are smaller than each first flow passage of the plurality of first flow passages and each second flow passage of the plurality of second flow passages, respectively.

9. The adsorption segment (304) of any one of claims 1 to 8, wherein the first thickness is less than the second thickness.

10. The adsorption segment (304) of any one of claims 1 to 9, wherein the pocket (606) contains a quantity of sorbent (608) that fills a first volume when the sorbent (608) has not adsorbed water, wherein the sorbent (608) fills a second volume when the sorbent (608) has adsorbed water, and where the second volume is larger than the first volume.

11. The adsorption segment (304) of any one of claims 1 to 10, wherein a portion of each pocket (606) of the plurality of pockets (606) is covered by a solid plate (902).

12. The adsorption segment (304) of any one of claims 1 to 11, wherein the first plate (602) is a planar plate comprising a first surface (610), a second surface (612), and a plurality of first walls (614) extending between the first surface (610) and the second surface (612) and separated from one another, and wherein the first surface (610), the second surface (612), and the plurality of first walls (614) cooperate to define the plurality of first flow passages.

13. The adsorption segment (304) of any one of claims 1 to 12, wherein the second plate (604) is planar plate comprising a third surface (616), a fourth surface (618), and a plurality of second walls (620) extending between the third surface (616) and the fourth surface (618) and separated from one another, and wherein the third surface (616), the fourth surface (618), and the plurality of second walls (620) cooperate to define the plurality of second flow passages.

14. The adsorption segment (304) of claim 13, wherein each second wall (620) of the plurality of second walls (620) has an oblique angle with respect to the third surface (616) and the fourth surface (618), respectively.

15. The adsorption segment (304) of any one of claims 1 to 14, further comprising a plug (1602) that is removably plugged into the filter plate (414), and wherein the plug (1602) comprises a solid plug or a push through rubber plug.
